# EUROPÄISCHE PATENTSCHRIFT

(11) **EP 3 350 464 B1**
(45) Veröffentlichungstag und Bekanntmachung des Hinweises auf die Patenterteilung: **27.11.2019**
(21) Anmeldenummer: 16766286.5
(22) Anmeldetag: 15.09.2016
(51) Int. Cl.: F16C 35/02, F16H 1/28, F16C 17/10, F16C 33/10, F16H 57/08, F16C 43/02

(54) **PLANETENGETRIEBE FÜR EINE WINDKRAFTANLAGE MIT GLEITGELAGERTEN PLANETENRÄDERN**
PLANETARY GEAR TRAIN FOR A WIND TURBINE WITH SLIDABLY MOUNTED PLANET GEARS
ENGRENAGE PLANÉTAIRE D'UNE ÉOLIENNE AVEC ROUES PLANÉTAIRES À PALIERS LISSES

(30) Priorität: 15.09.2015 AT 507892015
(43) Veröffentlichungstag der Anmeldung: 25.07.2018
(73) Patentinhaber: Miba Gleitlager Austria GmbH, 4663 Laakirchen (AT)
(72) Erfinder: HÖLZL, Johannes, 4880 Berg im Attergau (AT)
(74) Vertreter: Burger, Hannes
(86) Internationale Anmeldenummer: PCT/EP2016/071749
(87) Internationale Veröffentlichungsnummer: WO 2017/046194

(56) Entgegenhaltungen:
- EP-A1- 2 383 480
- DE-A1-102011 087 568
- DE-A1-102012 213 971
- GB-A- 2 010 415

## Beschreibung

Die Erfindung betrifft ein Planetengetriebe, sowie eine mit dem Planetengetriebe ausgestattete Windkraftanlage.

Ein gattungsgemäßes Planetengetriebe ist aus der EP 2 383 480 A1 bekannt. In diesem Dokument ist eine Planetenradachse drehfest mit dem Planetenträger verbunden. Eine zweiteilige Hülse ist in einer Bohrung des Planetenrades montiert. Zwischen den beiden Hülsenabschnitten ist eine umlaufende Schmierstoffversorgungsnut gebildet.

Ein weiteres Planetengetriebe für eine Windkraftanlage ist aus der WO2013/106878A1 derselben Anmelderin bekannt. In diesem Dokument ist zwischen einer Planetenachse und dem Planetenträger ein Gleitlager angeordnet, wobei das Planetenrad mit der Planetenachse drehfest verbunden ist. Zur axialen Lagerung des Planetenrades sind zwei Anlaufscheiben vorgesehen, welche beiderseits des Planetenrades zwischen Planetenrad und Planetenträger angeordnet sind.

Der vorliegenden Erfindung liegt die Aufgabe zugrunde, ein Planetengetriebe mit einer verbesserten Lagerung des Planetenrades zu schaffen.

Diese Aufgabe der Erfindung wird durch das Planetengetriebe nach Anspruch 1 gelöst. Erfindungsgemäß ist ein Planetengetriebe für eine Windkraftanlage ausgebildet. Das Planetengetriebe umfasst ein Sonnenrad, ein Hohlrad, einen Planetenträger mit einem ersten Bolzenaufnahmeelement, welches zumindest einen ersten Bolzensitz aufweist und, zumindest einen Planetenradbolzen, welcher im ersten Bolzensitz verdrehstarr aufgenommen ist; zumindest ein Planetenrad, welches am Planetenradbolzen mittels einer Lageranordnung relativ zum Planetenradbolzen verdrehbar aufgenommen ist, wobei das Planetenrad sowohl mit dem Sonnenrad als auch mit dem Hohlrad in Eingriff steht. Die Lageranordnung weist eine erste Planetenradaufnahmebuchse und eine zweite Planetenradaufhahmebuchse auf, welche Planetenradaufhahmebuchsen verdrehstarr mit dem Planetenrad gekoppelt sind und zwischen welchen Planetenradaufnahmebuchsen ein Axiallagerspalt ausgebildet ist. Die Lageranordnung weist zumindest eine Lagerlaufhülse auf, welche verdrehstarr am Planetenradbolzen aufgenommen ist und an welcher ein Axialpositionierflansch ausgebildet ist, welcher im Axiallagerspalt zwischen den Planetenradaufnahmebuchsen aufgenommen ist und dadurch eine axiale Positionsfixierung, insbesondere eine Axiallagerung, des Planetenrades am Planetenradbolzen realisiert ist.

Die erfindungsgemäße Ausbildung des Planetengetriebes weist den Vorteil auf, dass die Axiallagerung des Planetenrades platzsparend im Planetengetriebe angeordnet ist und dass ein derartig aufgebautes Planetengetriebe, insbesondere Planetenrad, einfach gewartet werden kann. Darüber hinaus ist es auch denkbar, dass in einem vorhandenen Planetengetriebe eine ursprünglich vorgesehene Wälzlagerung durch eine derartig aufgebaute Gleitlagerung ersetzt werden kann.

Weiters kann es zweckmäßig sein, dass die Lageranordnung eine erste Radialgleitlagerbuchse aufweist welche in der ersten Planetenradaufnahmebuchse verdrehfest aufgenommen ist und eine zweite Radialgleitlagerbuchse aufweist, welche in der zweiten Planetenradaufnahmebuchse verdrehfest aufgenommen ist, wobei die erste und die zweite Radialgleitlagerbuchse an einer Berührfläche mit der Lagerlaufhülse eine Gleitfläche zur Relativbewegung aufweisen. Eine derartige Gleitlagerbuchse kann im Verschleißfall einfach ausgetauscht werden bzw. können derartige Gleitlagerbuchsen so hergestellt werden, dass sie an die Erfordernisse des jeweiligen Planetengetriebes angepasst sind.

Ferner kann vorgesehen sein, dass die Lageranordnung eine erste Axialgleitlagerscheibe aufweist, welche zwischen der ersten Planetenradaufnahmebuchse und Axialpositionierflansch der Lagerlaufhülse angeordnet ist und
dass die Lageranordnung eine zweite Axialgleitlagerscheibe aufweist, welche zwischen der zweiten Planetenradaufnahmebuchse und Axialpositionierflansch der Lagerlaufhülse angeordnet ist. Durch die Anordnung von Axialgleitlagerscheiben kann die Leichtgängigkeit des Planetenrades erhöht werden bzw. kann erreicht werden, dass in der Lageranordnung auch Axialkräfte, beispielsweise durch eine Schrägverzahnung im Planetenrad, übertragen werden können.

Darüber hinaus kann vorgesehen sein, dass die erste Axialgleitlagerscheibe mittels eines Befestigungsmittels an der ersten Planetenradaufnahmebuchse befestigt ist und dass die zweite Axialgleitlagerscheibe mittels eines Befestigungsmittels an der zweiten Planetenradaufnahmebuchse befestigt ist. Von Vorteil ist hierbei, dass die Axialgleitlagerscheiben positionsfest innerhalb der Lageranordnung aufgenommen werden können und somit die Gleitflächen der Axialgleitlagerscheiben exakt vorbestimmt werden können.

Weiters kann vorgesehen sein, dass der Planetenträger ein zweites Bolzenaufnahmeelement aufweist, an welchem zumindest ein zweiter Bolzensitz ausgebildet ist, wobei das Planetenrad am Planetenradbolzen zwischen erstem Bolzensitz und zweitem Bolzensitz angeordnet ist. Von Vorteil ist hierbei, dass dadurch eine beidseitige Lagerung des Planetenradbolzens erreicht werden kann. Dies führt zu einer erhöhten Steifigkeit des Gesamtsystems und somit zu einer Verringerung der Schwingungen während des Betriebes des Planetengetriebes.

Vorteilhaft ist auch eine Ausprägung, gemäß welcher vorgesehen sein kann, dass die Lagerlaufhülse einen ersten Lagerlaufhülsenteil und einen zweiten Lagerlaufhülsenteil umfasst, wobei an einem der beiden Lagerlaufhülsenteile stirnseitig der Axialpositionierflansch ausgebildet ist und die beiden Lagerlaufhülsenteile so zueinander positioniert sind, dass der Axialpositionierflansch innenliegend zwischen den beiden Lagerlaufhülsenteilen angeordnet ist. Von Vorteil ist hierbei, dass die Lagerlaufhülse durch die geteilte Ausführung einfach und kostengünstig hergestellt werden kann und darüber hinaus der Einbau der Lagerhülse erleichtert wird.

Gemäß einer Weiterbildung ist es möglich, dass zumindest eine der Planetenradaufhahmebuchsen eine stirnseitig angeordnete Abstufung aufweist, welche den Axiallagerspalt bildet, wobei die beiden Planetenradaufhahmebuchsen einander stirnseitig berühren. Von Vorteil ist hierbei, dass dadurch die axiale Erstreckung des Axiallagerspaltes genau definiert werden kann. Somit kann ein axiales Lagerspiel festgelegt werden.

Ferner kann es zweckmäßig sein, dass im Planetenradbolzen zumindest eine Schmiermittelzuleitung ausgebildet ist, welche im Bereich der Lagerlaufhülsen aus dem Planetenradbolzen geführt ist und dass im Planetenradbolzen weiters zumindest eine Schmiermittelableitung ausgebildet ist, welche im Bereich des Axialpositionierflansches in den Planetenradbolzen einmündet. Von Vorteil ist hierbei, dass durch die Schmiermittelzuleitung und die Schmiermittelableitung die Axiallagerung und die Radiallagerung gezielt mittels externer Schmiermittelzufuhr geschmiert werden können.

Zum besseren Verständnis der Erfindung wird diese anhand der nachfolgenden Figuren näher erläutert.

Es zeigen jeweils in stark vereinfachter, schematischer Darstellung:
- Fig. 1: eine perspektivische Ansicht eines Ausführungsbeispiels Planetenträgers für ein Planetengetriebe;
- Fig. 2: eine Schnittdarstellung des Planetenträgers gemäß der Schnittlinie II-II nach Fig. 3;
- Fig. 3: eine Schnittdarstellung des Planetenträgers gemäß der Schnittlinie III-III nach Fig. 2;
- Fig. 4: eine Schnittdarstellung des Planetenträgers gemäß der Schnittlinie IV-IV nach Fig. 3;
- Fig. 5: eine Schnittdarstellung eines Planetenträgers mit fliegend gelagertem Planetenbolzen;
- Fig. 6: eine Schnittdarstellung eines Planetenträgers mit integriertem Planetenbolzen.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

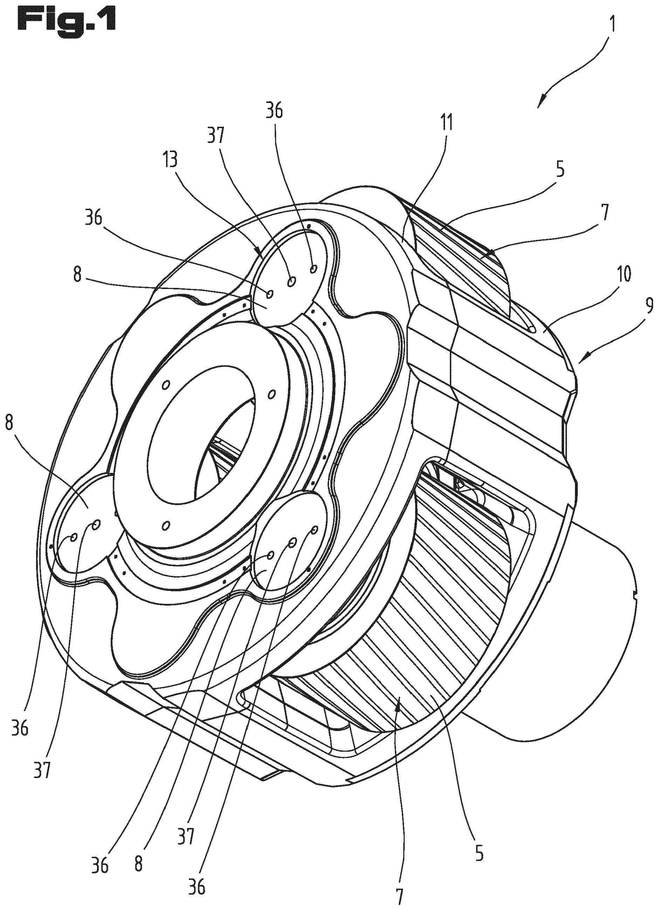

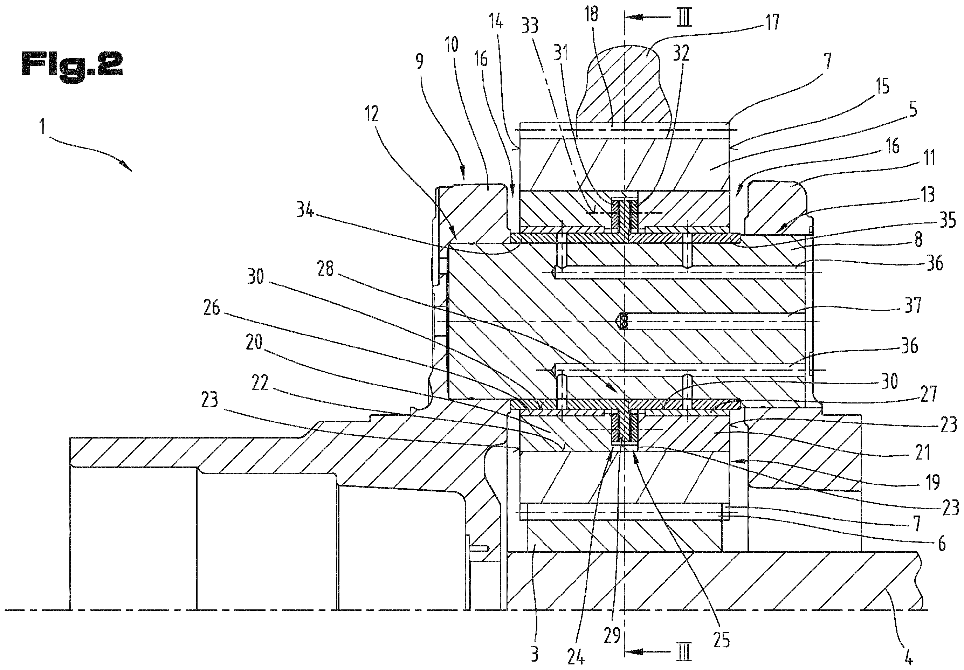

Fig. 1 zeigt eine perspektivische Ansicht des Innenlebens eines Planetengetriebes 1 für eine Windkraftanlage. Fig. 2 zeigt einen Halbschnitt des Planetengetriebes 1, wobei aus Gründen der Übersichtlichkeit nur ein oberhalb einer Mittelachse 2 liegender Teilabschnitt des Planetengetriebes 1 dargestellt ist.

Die folgende Beschreibung des Aufbaus des Planetengetriebes 1 basiert auf einer Zusammenschau der Figuren 1 und 2.

Bekanntlich umfassen Windkraftanlagen einen Turm an dessen oberen Ende eine Gondel angeordnet ist, in der der Rotor mit den Rotorblättern gelagert ist. Dieser Rotor ist über das Planetengetriebe 1 mit einem Generator, der sich ebenfalls in der Gondel befindet, wirkungsverbunden, wobei über das Planetengetriebe 1 die niedrige Drehzahl des Rotors in eine höhere Drehzahl des Generatorrotors übersetzt wird. Da derartige Ausführungen von Windkraftanlagen zum Stand der Technik gehören, sei an dieser Stelle an die einschlägige Literatur hierzu verwiesen.

Das Planetengetriebe 1 weist ein Sonnenrad 3 auf, das mit einer Welle 4, die zum Generatorrotor führt, bewegungsgekoppelt ist. Das Sonnenrad 3 ist von mehreren Planetenrädern 5, beispielsweise zwei, vorzugsweise drei oder vier, umgeben. Sowohl das Sonnenrad 3 als auch die Planetenräder 5 weisen außenliegende Stirnverzahnungen 6, 7 auf, die in kämmenden Eingriff miteinander stehen, wobei diese Stirnverzahnungen 6, 7 in Fig. 2 schematisch dargestellt sind.

Die Planetenräder 5 sind mittels Planetenradbolzen 8 in einem Planetenträger 9 gelagert, wobei im Planetenträger 9 ein erstes Bolzenaufnahmeelement 10 und ein zweites Bolzenaufnahmeelement 11 vorgesehen sind. In den Bolzenaufnahmeelementen 10, 11 sind ein erster Bolzensitz 12 und ein zweiter Bolzensitz 13 ausgebildet in welchen der Planetenradbolzen 8 aufgenommen ist. Der Planetenradbolzen 8 kann über zusätzliche Sicherungsmaßnahmen, wie etwa Befestigungsmittel im Planetenträger 9 gesichert sein.

Der Planetenträger 9, insbesondere die Bolzenaufnahmeelemente 10, 11 können einteilig aus einem Gusswerkstück ausgebildet sein.

In einer Alternativvariante ist es auch denkbar, dass das zweite Bolzenaufnahmeelement 11 mittels eines Befestigungsmittels am ersten Bolzenaufnahmeelement 10 befestigt ist und die beiden Bolzenaufnahmeelemente 10, 11 somit zerlegbar sind. Weiters können Führungsstifte vorgesehen sein, mittels welchen die Position des zweiten Bolzenaufnahmeelementes 11 relativ zum ersten Bolzenaufnahmeelement 10 festgelegt wird.

Wie besonders gut in Fig. 2 ersichtlich, kann vorgesehen sein, dass der erste Bolzensitz 12 in Form eines Sackloches ausgebildet ist und dass der zweite Bolzensitz 13 in Form eines Durchgangsloches ausgebildet ist. Somit kann der Planetenradbolzen 8 von der Seite des zweiten Bolzensitzes 13 in die beiden Bolzenaufnahmeelemente 10, 11 eingesteckt werden.

Weiters ist ersichtlich, dass das Planetenrad 5 in etwa mittig zwischen den beiden Bolzenaufnahmeelementen 10, 11 aufgenommen ist, wobei sowohl zwischen einer ersten Stirnseite 14 des Planetenrades 5 und dem ersten Bolzenaufnahmeelement 10 als auch zwischen einer zweiten Stirnseite 15 des Planetenrades 5 und dem zweiten Bolzenaufnahmeelement 11 ein axialer Freiraum 16 gebildet ist, sodass das Planetenrad 5 frei im Planetenträger 9 laufen kann.

An der Außenseite der Planetenräder 5 ist ein Hohlrad 17 angeordnet, welches eine Innenverzahnung 18 aufweist, die in kämmendem Eingriff mit der Stirnverzahnung 7 der Planetenräder 5 steht. Das Hohlrad 17 ist mit einer Rotorwelle des Rotors der Windkraftanlage bewegungsgekoppelt.

Die Stirnverzahnungen 6, 7 bzw. die Innenverzahnung 18 können beispielsweise als Geradverzahnung, als Schrägverzahnung oder als Doppelschrägverzahnung ausgeführt sein.

Da derartige Planetengetriebe 1 dem Prinzip nach ebenfalls bereits aus dem Stand der Technik bekannt sind, beispielsweise aus dem voranstehend zitierten Dokument zum Stand der Technik, erübrigt sich eine weitere Erörterung an dieser Stelle.

Es sei darauf hingewiesen, dass im Folgenden hinsichtlich des Planetenrades 5 die Einzahl verwendet wird. Es versteht sich aber von selbst, dass mehrere Planetenräder 5 erfindungsgemäß ausgebildet sein können.

Das Planetenrad 5 ist mittels einer Lageranordnung 19 am Planetenradbolzen 8 gelagert und dadurch relativ zum Planetenradbolzen 8 verdrehbar. Darüber hinaus kann durch die Lageranordnung 19 erreicht werden, dass der axiale Freiraum 16 zwischen Planetenrad 5 und den Bolzenaufnahmeelementen 10, 11 auch im Betrieb aufrecht gehalten wird und dadurch das Planetenrad 5 frei drehbar ist.

Die Lageranordnung 19 umfasst eine erste Planetenradaufnahmebuchse 20 und eine zweite Planetenradaufnahmebuchse 21, welche verdrehstarr im Planetenrad 5 aufgenommen sind. Dies kann beispielsweise dadurch erreicht werden, dass die Planetenradaufnahmebuchsen 20, 21 in eine innenliegende Zylinderfläche 22 des Planetenrades 5 eingesetzt sind. Die innenliegende Zylinderfläche 22 des Planetenrades 5 kann auch Abstufungen aufweisen, welche als Anschlag dienen. Um die Planetenradaufhahmebuchsen 20, 21 im Planetenrad 5 verdrehstarr aufnehmen zu können, kann beispielsweise vorgesehen sein, dass diese mittels eines Presssitzes im Planetenrad 5 aufgenommen sind. Zusätzlich oder alternativ dazu kann vorgesehen sein, dass die Planetenradaufnahmebuchsen 20, 21 im Planetenrad 5 mittels eines Befestigungsmittels, wie etwa einer Wurmschraube gesichert werden. In einer weiteren Variante kann vorgesehen sein, dass die die Planetenradaufnahmebuchsen 20, 21 im Planetenrad 5 mittels einer stoffschlüssigen Verbindung, wie etwa einer Klebeverbindung oder einer Schweißverbindung gesichert werden.

Weiters kann vorgesehen sein, dass zumindest eines der beiden Planetenradaufnahmebuchsen 20, 21 an einer Stirnseite 23 eine Abstufung 24 aufweist, durch welche ein Axiallagerspalt 25 ausgebildet wird. Die Planetenradaufnahmebuchsen 20, 21 sind vorzugsweise in Form eines Hohlzylinders ausgebildet, wobei die Abstufung 24 in der innenliegenden Zylinderfläche der Planetenradaufnahmebuchse 20, 21 ausgebildet ist. Insbesondere kann vorgesehen sein, dass Stirnseiten 23 der Planetenradaufnahmebuchsen 20, 21 im fertig verbauten Zustand aneinander anliegen.

In einer weiteren nicht dargestellten Ausführungsvariante kann vorgesehen sein, dass mittig der Zylinderfläche 22 des Planetenrades 5 ein Ansatz angeordnet ist, an welchem die Planetenradaufnahmebuchsen 20, 21 anliegen, wodurch der Axiallagerspalt 25 gebildet ist.

In wieder einer anderen Ausführungsvariante kann vorgesehen sein, dass eine der beiden Planetenradaufnahmebuchsen 20, 21 einteilig mit dem Planetenrad 5 verbunden ist, beziehungsweise dass eine der beiden Planetenradaufnahmebuchsen 20, 21 einstückig mit dem Planetenrad 5 ausgeformt ist.

Weiters kann vorgesehen sein, dass an der Innenmantelfläche der ersten Planetenradaufnahmebuchse 20 eine erste Radialgleitlagerbuchse 26 aufgenommen ist und dass an der Innenmantelfläche der zweiten Planetenradaufnahmebuchse 21 eine zweite Radialgleitlagerbuchse 27 angeordnet ist. Die beiden Radialgleitlagerbuchsen 26, 27 sind vorzugsweise mittels einer Pressverbindung in den Planetenradaufnahmebuchsen 20, 21 aufgenommen. Dadurch sind die Radialgleitlagerbuchsen 26, 27 vorzugsweise verdrehstarr in den Planetenradaufnahmebuchsen 20, 21 aufgenommen. Insbesondere kann vorgesehen sein, dass in den Planetenradaufnahmebuchsen 20, 21 ein Ansatz ausgebildet ist, in welchem die Radialgleitlagerbuchsen 26, 27 aufgenommen sind. Dadurch kann die axiale Position der Radialgleitlagerbuchsen 26, 27 festgelegt werden.

Weiters ist eine Lagerlaufhülse 28 vorgesehen, welche vorzugsweise mittels einer Pressverbindung am Planetenradbolzen 8 befestigt ist. Die Lagerlaufhülse 28 kann ebenfalls zusätzlich in deren Sitz am Planetenradbolzen 8 gesichert sein. Die Lagerlaufhülse 28 weist einen Axialpositionierflansch 29 auf, welcher im Axiallagerspalt 25 aufgenommen ist. Durch den Axialpositionierflansch 29 bzw. den Axiallagerspalt 25 kann das Planetenrad 5 in seiner Axialposition gesichert werden.

Wie aus Fig. 2 ersichtlich, kann vorgesehen sein, dass die erste und die zweite Radialgleitlagerbuchse 26, 27 eine Gleitfläche 30 aufweisen, mittels welcher diese an der Lagerlaufhülse 28 aufliegen und wodurch die Gleitlagerung des Planetenrades 5 gebildet ist.

In einer weiteren nicht dargestellten Ausführungsvariante kann auch vorgesehen sein, dass die Gleitfläche 30 nicht an der inneren Zylinderfläche der Radialgleitlagerbuchsen 26, 27 angeordnet ist, sondern dass diese an der äußeren Zylinderfläche der Radialgleitlagerbuchsen 26, 27 angeordnet ist. Bei einer derartigen Ausführungsvariante ist die Radialgleitlagerbuchse 26, 27 verdrehstarr an der Lagerlaufhülse 28 aufgepresst und findet die Relativbewegung zwischen Radialgleitlagerbuchse 26, 27 und den Planetenradaufnahmebuchsen 20, 21 statt. Weiters kann vorgesehen sein, dass zwischen dem Axialpositionierflansch 29 und der ersten Planetenradaufhahmebuchse 20 eine erste Axialgleitlagerscheibe 31 angeordnet ist und dass analog dazu zwischen Axialpositionierflansch 29 und der zweiten Planetenradaufnahmebuchse 21 eine zweite Axialgleitlagerscheibe 32 angeordnet ist.

In einer ersten Variante kann vorgesehen sein, dass die Axialgleitlagerscheiben 31, 32 mittels eines Befestigungsmittels 33 an der ersten bzw. oder zweiten Planetenradaufhahmebuchse 20, 21 angeordnet sind. Die Relativbewegung findet somit zwischen Axialgleitlagerscheiben 31, 32 und dem Axialpositionierflansch 29 statt. Ein derartiges Befestigungsmittel kann beispielsweise eine Inbus- oder eine Senkkopfschraube sein.

Alternativ dazu kann vorgesehen sein, dass anstatt des Befestigungsmittels 33 eine Klebeverbindung zum Befestigen der Axialgleitlagerscheiben 31, 32 an den Planetenradaufnahmebuchse 20, 21 verwendet wird.

In einer weiteren nicht dargestellten Ausführungsvariante kann vorgesehen sein, dass mittels einem Befestigungsmittel 33 oder einer Klebeverbindung die Axialgleitlagerscheiben 31, 32 am Axialpositionierflansch 29 befestigt sind und dass eine Relativbewegung zwischen den Axialgleitlagerscheiben 31, 32 und den Planetenradaufhahmebuchsen 20, 21 stattfindet.

In wieder einer anderen Ausführungsvariante kann vorgesehen sein, dass die Axialgleitlagerscheiben 31, 32 entweder durch deren außenliegender oder durch deren innenliegender Umfangfläche radial innerhalb des Axiallagerspaltes 25 fixiert ist und die Axialgleitlagerscheibe 31, 32 somit lose im Axiallagerspalt 25 eingelegt sein können.

Wie in Fig. 2 dargestellt, kann vorgesehen sein, dass die Lagerlaufhülse 28 durch einen ersten Lagerlaufhülsenteil 34 und einen zweiten Lagerlaufhülsenteil 35 gebildet ist. Eine derartige Ausführung der Lagerlaufhülse 28 weist den Vorteil auf, dass die einzelnen Lagerlaufhülsenteile 34, 35 einfach zu fertigen sind und getrennt voneinander verbaut werden können. Bei einer derartigen geteilten Ausbildung ist an einem der Lagerlaufhülsenteile 34, 35 der Axialpositionierflansch 29 ausgebildet. Die beiden Lagerlaufhülsenteile 34, 35 werden im verbauten Zustand so zueinander positioniert, dass der Axialpositionierflansch 29 in etwa mittig der beiden Lagerlaufhülsenteile 34, 35 angeordnet ist.

In einem weiteren nicht dargestellten Ausführungsbeispiel kann vorgesehen sein, dass die Lagerlaufhülse 28 eine ähnliche Formgebung, wie die in Fig. 2 im gefügten Zustand dargestellten Lagerlaufhülsenteile 34, 35 aufweist, jedoch einteilig ausgebildet ist.

Weiters kann vorgesehen sein, dass im Planetenradbolzen 8 eine Schmiermittelzuleitung 36 ausgebildet ist, mittels welcher Schmiermittel, wie etwa Öl, zu den Gleitflächen 30 der beiden Gleitlagerbuchsen 26, 27 zugeführt werden kann. Insbesondere kann vorgesehen sein, dass die Lagerlaufhülse 28 zumindest eine Bohrung aufweist, welche mit der Mündungsöffnung im Umfangbereich des Planetenradbolzens 8 deckungsgleich ist und somit das Schmiermittel direkt zur Gleitfläche 30 geleitet werden kann. Weiters kann vorgesehen sein, dass auf den Umfang verteilt, mehrere Bohrungen bzw. Mündungen der Schmiermittelzuleitung 36 vorgesehen sind, sodass die radialen Gleitlagerbuchsen 26, 27 an mehreren Stellen mit einem Schmiermittel versorgt werden können.

Um zu erreichen, dass die Bohrungen in der Lagerlaufhülse 28 mit den Mündungen der Schmiermittelzuleitung 36 im Planetenradbolzen 8 deckungsgleich sind, kann vorgesehen sein, dass zwischen Lagerlaufhülse 28 und Planetenradbolzen 8 eine Passfeder oder eine sonstige formschlüssige Verbindung zur Verdrehsicherung ausgebildet ist.

Weiters kann eine Schmiermittelableitung 37 vorgesehen sein, mittels welcher das in den Axiallagerspalt 25 gedrückte Schmiermittel aus dem Axiallagerspalt 25 abgeführt werden kann.

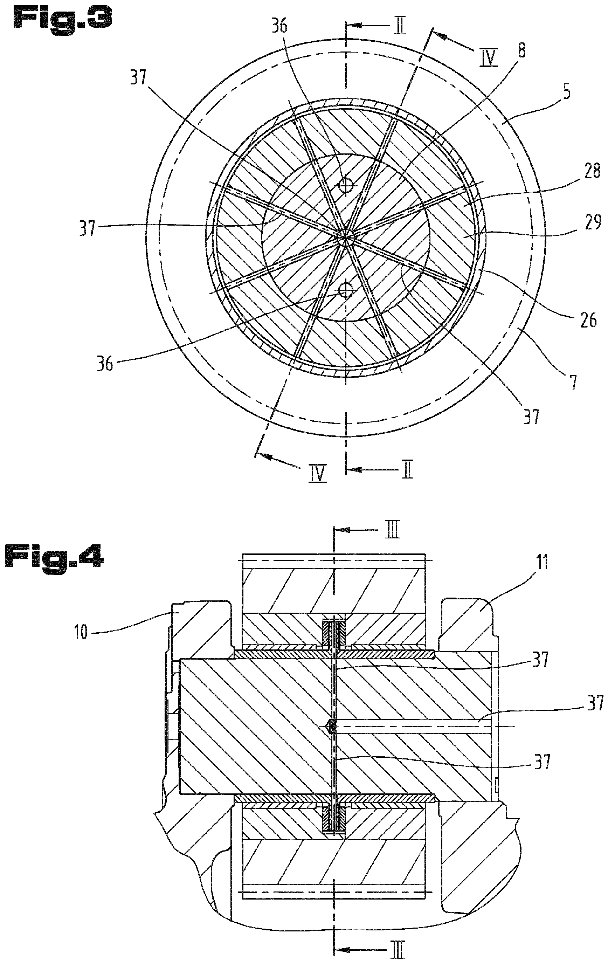

Fig. 3 zeigt eine Schnittdarstellung des Planetenträgers gemäß der Schnittlinie III-III nach Fig. 2, wobei wiederum für gleiche Teile gleiche Bezugszeichen bzw. Bauteilbezeichnungen wie in den vorangegangenen Figuren 1 und 2 verwendet werden. Um unnötige Wiederholungen zu vermeiden, wird auf die detaillierte Beschreibung in den vorangegangenen Figuren 1 und 2 hingewiesen bzw. Bezug genommen.

Fig. 4 zeigt eine Schnittdarstellung des Planetenträgers gemäß der Schnittlinie IV-IV nach Fig. 3, wobei wiederum für gleiche Teile gleiche Bezugszeichen bzw. Bauteilbezeichnungen wie in den vorangegangenen Figuren 1 bis 3 verwendet werden. Um unnötige Wiederholungen zu vermeiden, wird auf die detaillierte Beschreibung in den vorangegangenen Figuren 1 bis 3 hingewiesen bzw. Bezug genommen.

Wie besonders gut aus einer Zusammenschau der Fig. 3 und 4 ersichtlich, ist die Schmiermittelableitung 37 im Bereich des Axialpositionierflansches 29 in vorzugsweise mehreren Mündungsöffnungen nach außen gezogen. Insbesondere kann vorgesehen sein, dass die Lagerlaufhülse 28 im Bereich des Axialpositionierflansches 29 radiale Bohrungen aufweist, welche mit der Schmiermittelableitung 37 des Planetenradbolzens deckungsgleich sind und somit das Schmiermittel aus dem Axiallagerspalt 25 abgeführt werden kann. Durch die beschriebene Anordnung der Schmiermittelzuleitung 36 bzw. der Schmiermittelableitung 37 kann erreicht werden, dass sowohl die Radialgleitlagerbuchsen 26, 27 als auch die Axialgleitlagerscheiben 31, 32 mit ausreichend Schmiermittel versorgt werden.

Anhand der Fig. 2 wird nun der mögliche Einbau eines derartig ausgebildeten Planetenrades 5 in den Planetenträger 9 beschrieben.

In einem ersten Verfahrensschritt wird die erste Planetenradaufnahmebuchse 20 in das Planetenrad 5 hineingepresst und bedarfsweise gesichert. In einem weiteren Verfahrensschritt wird nun die erste Radialgleitlagerbuchse 26 in die erste Planetenradaufhahmebuchse 20 gepresst. Alternativ dazu ist es auch denkbar, dass die erste Radialgleitlagerbuchse 26 bereits vor dem Einsetzen der ersten Planetenradaufnahmebuchse 20 in das Planetenrad 5 mit der ersten Planetenradaufnahmebuchse 20 verpresst wird.

In einem weiteren Verfahrensschritt wird nun die erste Axialgleitlagerscheibe 31 in den Axiallagerspalt 25 eingesetzt. Nun kann die Lagerlaufhülse 28 derart in die erste Radialgleitlagerbuchse 26 eingesetzt werden, dass der Axialpositionierflansch 29 im Axiallagerspalt 25 aufgenommen ist.

In einem weiteren Verfahrensschritt kann die zweite Radialgleitlagerbuchse 27 in die zweite Planetenradaufnahmebuchse 21 eingepresst werden und die zweite Axialgleitlagerscheibe 32 an dieser positioniert werden.

In einem weiteren Verfahrensschritt kann nun die zweite Planetenradaufnahmebuchse 21 in das Planetenrad 5 eingepresst werden und bedarfsweise in diesem gesichert werden. Dadurch bildet das Planetenrad 5 mit den Planetenradaufnahmebuchsen 20, 21 der Lagerlaufhülse 28 sowie den zwischen den Einzelteilen angeordneten Radialgleitlagerbuchsen 26, 27 und Axialgleitlagerscheiben 31, 32 eine Einheit.

In einem weiteren Verfahrensschritt kann nun diese Einheit in den Planetenträger 9 eingesetzt werden und der Planetenradbolzen 8 ausgehend von der Seite des zweiten Bolzensitzes 13 in die beiden Bolzensitze 12, 13 eingeschoben werden und anschließend bedarfsweise gesichert werden.

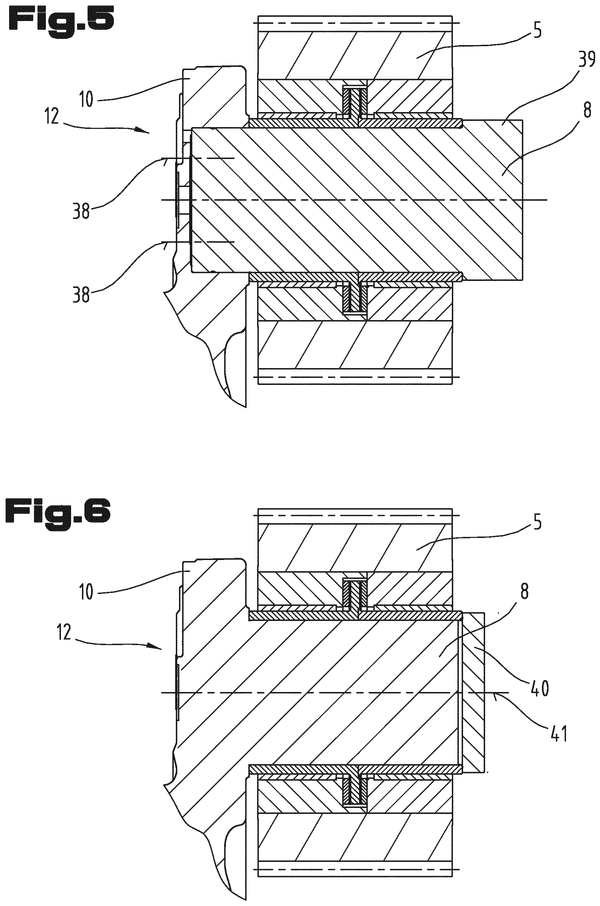

In der Fig. 5 ist eine weitere und gegebenenfalls für sich eigenständige Ausführungsform des Planetengetriebes 1 gezeigt, wobei wiederum für gleiche Teile gleiche Bezugszeichen bzw. Bauteilbezeichnungen wie in den vorangegangenen Figuren 1 bis 4 verwendet werden. Um unnötige Wiederholungen zu vermeiden, wird auf die detaillierte Beschreibung in den vorangegangenen Figuren 1 bis 4 hingewiesen bzw. Bezug genommen.

In der Ausführungsvariante gemäß Fig. 5 ist nur das erste Bolzenaufnahmeelement 10 zur Aufnahme des Planetenradbolzens 8 vorgesehen. Mit anderen Worten ausgedrückt ist der Planetenradbolzen 8 fliegend im ersten Bolzensitz 12 gelagert. Auch in dieser Ausführungsvariante ist der Planetenradbolzen 8 verdrehstarr im ersten Bolzensitz 12 aufgenommen.

Zur Befestigung des Planetenradbolzens 8 im ersten Bolzenaufnahmeelement 10 können ein oder mehrere Befestigungselemente 38 vorgesehen sein. Die Befestigungselemente 38 können beispielsweise in Form von Schrauben ausgebildet sein. Weiters kann vorgesehen sein, dass der Planetenradbolzen 8 eine Schulter 39 aufweist. Insbesondere kann vorgesehen sein dass die Lagerlaufhülsenteile 34, 35 zwischen der Schulter 39 und dem ersten Bolzenaufnahmeelement 10 geklemmt sind. Eine derartige Klemmung kann durch Festziehen der Befestigungselemente 38 erreicht werden.

In der Fig. 6 ist eine weitere und gegebenenfalls für sich eigenständige Ausführungsform des Planetengetriebes 1 gezeigt, wobei wiederum für gleiche Teile gleiche Bezugszeichen bzw. Bauteilbezeichnungen wie in den vorangegangenen Figuren 1 bis 5 verwendet werden. Um unnötige Wiederholungen zu vermeiden, wird auf die detaillierte Beschreibung in den vorangegangenen Figuren 1 bis 5 hingewiesen bzw. Bezug genommen.

In der weiteren Ausführungsvariante nach Fig. 6 kann vorgesehen sein, dass der Planetenradbolzen 8 mit dem ersten Bolzenaufnahmeelement 10 einstückig oder einteilig ausgebildet ist. Bei einer derartigen Ausführungsvariante wird der erste Bolzensitz 12 durch die stoffschlüssige Materialverbindung realisiert.

Um die Lagerlaufhülsenteile 34, 35 am Planetenradbolzen 8 befestigen zu können, kann ein Axialsicherungselement 40 vorgesehen sein, mittels welchem die Lagerlaufhülsenteile 34, 35 geklemmt werden können. Das Axialsicherungselement 40 kann wie dargestellt in Form einer Scheibe ausgebildet sein, welche mittels einem weiteren Befestigungsmittel 41, wie etwa einer Schraube, am Planetenradbolzen 8 befestigt werden kann.

In einer nicht dargestellten Ausführungsvariante kann auch vorgesehen sein, dass das Axialsicherungselement 40 in Form einer Wellenmutter ausgebildet ist, welche direkt auf den Planetenradbolzen 8 aufgeschraubt ist.

In wieder einer anderen nicht dargestellten Ausführungsvariante kann auch vorgesehen sein, dass das Axialsicherungselement 40 in Form eines Axialsicherungsringes ausgebildet ist, welcher direkt am Planetenradbolzen 8 befestigt ist. Natürlich können auch weitere Formen von Axialsicherungselementen 40 eingesetzt werden.

Analog zu den Ausführungsbeispielen gemäß der Figuren 1 bis 4 kann auch bei den Ausführungsbeispielen gemäß der Figuren 5 und 6 eine Schmiermittelversorgung im Planetenradbolzen 8 ausgebildet sein.

Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Die den eigenständigen erfinderischen Lösungen zugrundeliegende Aufgabe kann der Beschreibung entnommen werden.

Der Ordnung halber sei abschließend darauf hingewiesen, dass zum besseren Verständnis des Aufbaus der Einzelteile diese teilweise unmaßstäblich und/oder vergrößert und/oder verkleinert dargestellt wurden.

**Bezugszeichenaufstellung**

| | | | |
|---|---|---|---|
| 1 | Planetengetriebe | 30 | Gleitfläche |
| 2 | Mittelachse Planetengetriebe | 31 | erste Axialgleitlagerscheibe |
| 3 | Sonnenrad | 32 | zweite Axialgleitlagerscheibe |
| 4 | Welle | 33 | Befestigungsmittel |
| 5 | Planetenrad | 34 | erster Lagerlaufhülsenteil |
| 6 | Stirnverzahnung Sonnenrad | 35 | zweiter Lagerlaufhülsenteil |
| 7 | Stirnverzahnung Planetenrad | 36 | Schmiermittelzuleitung |
| 8 | Planetenradbolzen | 37 | Schmiermittelableitung |
| 9 | Planetenträger | 38 | Befestigungselement |
| 10 | erstes Bolzenaufnahmeelement | 39 | Schulter |
| 11 | zweites Bolzenaufnahmeelement | 40 | Axialsicherungselement |
| 12 | erster Bolzensitz | 41 | weiteres Befestigungsmittel |
| 13 | zweiter Bolzensitz | | |
| 14 | erste Stirnseite Planetenrad | | |
| 15 | zweite tirnseite Planetenrad | | |
| 16 | axialer Freiraum | | |
| 17 | Hohlrad | | |
| 18 | Innenverzahnung | | |
| 19 | Lageranordnung | | |
| 20 | erste Planetenradaufnahmebuchse | | |
| 21 | zweite Planetenradaufnahmebuchse | | |
| 22 | Zylinderfläche Planetenrad | | |
| 23 | Stirnseite | | |
| 24 | Abstufung | | |
| 25 | Axiallagerspalt | | |
| 26 | erste Radialgleitlagerbuchse | | |
| 27 | zweite Radialgleitlagerbuchse | | |
| 28 | Lagerlaufhülse | | |
| 29 | Axialpositionierflansch | | |

## Patentansprüche

1. Planetengetriebe (1) für eine Windkraftanlage, umfassend:
ein Sonnenrad (3);
ein Hohlrad (17);
einen Planetenträger (9) mit einem ersten Bolzenaufnahmeelement (10), welches zumindest einen ersten Bolzensitz (12) aufweist;
zumindest einen Planetenradbolzen (8), welcher im ersten Bolzensitz (12) verdrehstarr aufgenommen ist;
zumindest ein Planetenrad (5), welches am Planetenradbolzen (8) mittels einer Lageranordnung (19) relativ zum Planetenradbolzen (8) verdrehbar aufgenommen ist, wobei das Planetenrad (5) sowohl mit dem Sonnenrad (3) als auch mit dem Hohlrad (17) in Eingriff steht, wobei die Lageranordnung (19) eine erste Planetenradaufnahmebuchse (20) und eine zweite Planetenradaufnahmebuchse (21) aufweist, welche Planetenradaufhahmebuchsen (20, 21) verdrehstarr mit dem Planetenrad (5) gekoppelt sind und zwischen welchen Planetenradaufnahmebuchsen (20, 21) ein Axiallagerspalt (25) ausgebildet ist, **dadurch gekennzeichnet, dass** die Lageranordnung (19) zumindest eine Lagerlaufhülse (28) aufweist, welche verdrehstarr am Planetenradbolzen (8) aufgenommen ist und an welcher ein Axialpositionierflansch (29) ausgebildet ist, welcher im Axiallagerspalt (25) zwischen den Planetenradaufnahmebuchsen (20, 21) aufgenommen ist und dadurch eine axiale Positionsfixierung, insbesondere eine Axiallagerung, des Planetenrades (5) am Planetenradbolzen (8) realisiert ist.

2. Planetengetriebe nach Anspruch 1, **dadurch gekennzeichnet, dass** die Lageranordnung (19) weiters eine erste Radialgleitlagerbuchse (26) aufweist welche in der ersten Planetenradaufnahmebuchse (20) verdrehfest aufgenommen ist und eine zweite Radialgleitlagerbuchse (27) aufweist, welche in der zweiten Planetenradaufnahmebuchse (21) verdrehfest aufgenommen ist, wobei die erste (26) und die zweite Radialgleitlagerbuchse (27) an einer Berührfläche mit der Lagerlaufhülse (28) eine Gleitfläche (30) zur Relativbewegung aufweisen.

3. Planetengetriebe nach Anspruch 1 oder 2, **dadurch gekennzeichnet, dass** die Lageranordnung (19) eine erste Axialgleitlagerscheibe (31) aufweist, welche zwischen der ersten Planetenradaufnahmebuchse (20) und Axialpositionierflansch (29) der Lagerlaufhülse (28) angeordnet ist und
dass die Lageranordnung (19) eine zweite Axialgleitlagerscheibe (32) aufweist, welche zwischen der zweiten Planetenradaufhahmebuchse (21) und Axialpositionierflansch (29) der Lagerlaufhülse (28) angeordnet ist.

4. Planetengetriebe nach Anspruch 3, **dadurch gekennzeichnet, dass** die erste Axialgleitlagerscheibe (31) mittels einem Befestigungsmittel (33) an der ersten Planetenradaufnahmebuchse (20) befestigt ist und dass die zweite Axialgleitlagerscheibe (32) mittels einem Befestigungsmittel (33) an der zweiten Planetenradaufhahmebuchse (21) befestigt ist.

5. Planetengetriebe nach einem der vorhergehenden Ansprüche, **dadurch gekennzeichnet, dass** der Planetenträger (9) ein zweites Bolzenaufnahmeelement (11) aufweist, an welchem zumindest ein zweiter Bolzensitz (13) ausgebildet ist, wobei das Planetenrad (5) am Planetenradbolzen (8) zwischen erstem Bolzensitz (12) und zweitem Bolzensitz (13) angeordnet ist.

6. Planetengetriebe nach einem der vorhergehenden Ansprüche, **dadurch gekennzeichnet, dass** die Lagerlaufhülse (28) einen ersten Lagerlaufhülsenteil (34) und einen zweiten Lagerlaufhülsenteil (35) umfasst, wobei an einem der beiden Lagerlaufhülsenteile (34, 35) stirnseitig der Axialpositionierflansch (29) ausgebildet ist und die beiden Lagerlaufhülsenteile (34, 35) so zueinander positioniert sind, dass der Axialpositionierflansch (29) innenliegend zwischen den beiden Lagerlaufhülsenteilen (34, 35) angeordnet ist.

7. Planetengetriebe nach einem der vorhergehenden Ansprüche, **dadurch gekennzeichnet, dass** zumindest eine der Planetenradaufnahmebuchsen (20, 21) eine stirnseitig angeordnete Abstufung (24) aufweist, welche den Axiallagerspalt (25) bildet, wobei die beiden Planetenradaufnahmebuchsen (20, 21) einander stirnseitig berühren.

8. Planetengetriebe nach einem der vorhergehenden Ansprüche, **dadurch gekennzeichnet, dass** im Planetenradbolzen (8) zumindest eine Schmiermittelzuleitung (36) ausgebildet ist, welche im Bereich der Lagerlaufhülsen (28) aus dem Planetenradbolzen (8) geführt ist und dass im Planetenradbolzen (8) weiters zumindest eine Schmiermittelableitung (37) ausgebildet ist, welche im Bereich des Axialpositionierflansches (29) in den Planetenradbolzen (8) einmündet.

9. Windkraftanlage mit einem Planetengetriebe (1), **dadurch gekennzeichnet, dass** das Planetengetriebe (1) nach einem der vorhergehenden Ansprüche ausgebildet ist.

## Claims

1. A planetary gearing (1) for a wind turbine, comprising:
a sun gear (3),
a hollow gear (17),
a planetary carrier (9) with a first bolt receiving element (10) which comprises at least one first bolt seat (12),
at least one planetary gear bolt (8) which is mounted in the first bolt seat (12) in a rotationally secure manner,
at least one planetary gear (5), which is mounted on the planetary gear bolt (8) so as to be rotational relative to the planetary gear bolt (8) by means of a bearing assembly (19), wherein the planetary gear (5) is in engagement both with the sun gear (3) and with the hollow gear (17),
wherein the bearing assembly (19) comprises a first planetary gear receiving bushing (20) and a second planetary gear receiving bushing (21), which planetary gear receiving bushings (20, 21) are coupled to the planetary gear (5) in a rotationally secure manner and between which planetary gear receiving bushings (20, 21) an axial bearing gap (25) is formed,
**characterized in that** the bearing assembly (19) comprises at least one bearing running sleeve (28), which is mounted on the planetary gear bolt (8) in a rotationally secure manner and on which an axial positioning flange (29) is formed, which is mounted in the axial bearing gap (25) between the planetary gear receiving bushings (20, 21) and in this way an axial position fixing, in particular an axial bearing, of the planetary gear (5) on the planetary gear bolt (8) is realized.

2. The planetary gearing according to claim 1, **characterized in that** the bearing assembly (19) also comprises a first radial sliding bearing bush (26) which is mounted in a rotationally secure manner in the first planetary gear receiving bushing (20) and comprises a second radial sliding bearing bush (27) which is mounted in a rotationally secure manner in the second planetary gear receiving bushing (21), wherein the first (26) and the second radial sliding bearing bush (27) have a sliding surface (30) for relative movement on a contact surface with the bearing running sleeve (28).

3. The planetary gearing according to claim 1 or 2, **characterized in that** the bearing assembly (19) comprises a first axial sliding bearing disc (31) which is arranged between the first planetary gear receiving bushing (20) and the axial positioning flange (29) of the bearing running sleeve (28) and the bearing assembly (19) comprises a second axial sliding bearing disc (32) which is arranged between the second planetary gear receiving bushing (21) and the axial positioning flange (29) of the bearing running sleeve (28).

4. The planetary gearing according to claim 3, **characterized in that** the first axial sliding bearing disc (31) is secured by means of a fastening means (33) onto the first planetary gear receiving bushing (20) and that the second axial sliding bearing disc (32) is secured by means of a fastening means (33) onto the second planetary gear receiving bushing (21).

5. The planetary gearing according to one of the preceding claims, **characterized in that** the planetary carrier (9) comprises a second bolt receiving element (11), on which at least one second bolt seat (13) is formed, wherein the planetary gear (5) is arranged on the planetary gear bolt (8) between the first bolt seat (12) and the second bolt seat (13).

6. The planetary gearing according to one of the preceding claims, **characterized in that** the bearing running sleeve (28) comprises a first bearing running sleeve part (34) and a second bearing running sleeve part (35), wherein on one of the two bearing running sleeve parts (34, 35) the axial positioning flange (29) is formed on the end face and the two bearing running sleeve parts (34, 35) are positioned relative to one another such that the axial positioning flange (29) is arranged in the interior between the two bearing running sleeve parts (34, 35).

7. The planetary gearing according to one of the preceding claims, **characterized in that** at least one of the planetary gear receiving bushings (20, 21) comprises an end face graduation (24) which forms the axial bearing gap (25), wherein the two planetary gear receiving bushings (20, 21) contact one another at their end faces.

8. The planetary gearing according to one of the preceding claims, **characterized in that** in the planetary gear bolt (8) at least one lubricant inlet (36) is formed, which is guided out of the planetary gear bolt (8) in the area of the bearing running sleeves (28) and that in the planetary gear bolt (8) also at least one lubricant outlet (37) is formed, which opens into the planetary gear bolt (8) in the area of the axial positioning flange (29).

9. A wind turbine with a planetary gearing (1), **characterized in that** the planetary gearing (1) is designed according to one of the preceding claims.

## Revendications

1. Engrenage planétaire (1) d'une éolienne comprenant :
un pignon solaire (3) ;
une couronne (17) ;
un porte-satellites (9) avec un premier élément de logement d'axe (10) qui comprend au moins un siège d'axe (12) ;
au moins un axe de pignon planétaire (8) qui est logé de manière rigide en rotation dans le premier siège d'axe (12) ;
au moins un pignon planétaire (5), qui est logé de manière rotative par rapport à l'axe de pignon planétaire (8) au niveau de l'axe de pignon planétaire (8) au moyen d'un dispositif de palier (19), le pignon planétaire (5) étant engrené aussi bien avec le pignon solaire (3) qu'avec la couronne (17),
le dispositif de palier (19) comprenant une première douille de logement de pignon planétaire (20) et une deuxième douille de logement de pignon planétaire (21), ces douilles de logement de pignon planétaire (20, 21) étant couplées de manière rigide en rotation avec le pignon planétaire (5) et, entre ces douilles de logement de pignon planétaire (20, 21), est réalisé un interstice de palier axiale (25), **caractérisé en ce que** le dispositif de palier (19) comprend au moins un coussinet de palier (28) qui est logé de manière rigide en rotation au niveau de l'axe du pignon planétaire (8) et sur lequel est réalisée une bride de positionnement axial (29) qui est logée dans l'interstice de palier axial (25) entre les douilles de logement du pignon planétaire (20, 21), ce qui permet la fixation d'une position axiale, plus particulièrement un logement axial, du pignon planétaire (5) au niveau de l'axe du pignon planétaire (8).

2. Engrenage planétaire selon la revendication 1, **caractérisé en ce que** le dispositif de palier (19) comprend en outre un premier coussinet de palier lisse radial (26) qui est logé de manière fixe en rotation dans la première douille de logement du pignon planétaire (20) et un deuxième coussinet de palier lisse radial (27), qui est logé de manière fixe en rotation dans la deuxième douille de logement de pignon planétaire (21), le premier (26) et le deuxième coussinet de palier lisse radial (27) comprenant, au niveau d'une surface de contact avec le coussinet de palier (28), une surface de glissement (30) pour un mouvement relatif.

3. Engrenage planétaire selon la revendication 1 ou 2, **caractérisé en ce que** le dispositif de palier (19) comprend un premier disque de palier lisse axial (31) qui est disposé entre la première douille de logement du pignon planétaire (20) et la bride de positionnement axial (29) du coussinet de palier (28) et
**en ce que** le dispositif de palier (19) comprend un deuxième disque de palier lisse axial (32) qui est disposé entre la deuxième douille de logement du pignon planétaire (21) et la bride de positionnement axial (29) du coussinet de palier (28).

4. Engrenage planétaire selon la revendication 3, **caractérisé en ce que** le premier disque de palier lisse axial (31) est fixé, à l'aide d'un moyen de fixation (33), à la première douille de logement du pignon planétaire (20) et **en ce que** le deuxième disque de palier lisse axial (32) est fixé, à l'aide d'un moyen de fixation (33), à deuxième douille de logement du pignon planétaire (21).

5. Engrenage planétaire selon l'une des revendications précédentes, **caractérisé en ce que** le porte-satellites (9) comprend un deuxième élément de logement d'axe (11) sur lequel est réalisé au moins un deuxième siège d'axe (13), le pignon planétaire (5) étant disposé sur l'axe du pignon planétaire (8) entre le premier siège d'axe (12) et le deuxième siège d'axe (13).

6. Engrenage planétaire selon l'une des revendications précédentes, **caractérisé en ce que** le coussinet de palier (28) comprend une première partie de coussinet de palier (34) et une deuxième partie de coussinet de palier (35), moyennant quoi, sur une des deux parties du coussinet de palier (34, 35), la bride de positionnement axial (29) est réalisé sur le côté frontal et les deux parties du coussinet de palier (34, 35) étant positionnées l'une par rapport à l'autre de façon à ce que la bride de positionnement axial (29) soit disposée à l'intérieur entre les deux parties du coussinet de palier (34, 35).

7. Engrenage planétaire selon l'une des revendications précédentes, **caractérisé en ce qu'**au moins une des deux douilles de logement du pignon planétaire (20, 21) comprend un épaulement (24) côté frontal, qui forme l'interstice de palier axial (25), les deux douilles de logement du pignon planétaire (20, 21) entrant en contact sur le côté frontal.

8. Engrenage planétaire selon l'une des revendications précédentes, **caractérisé en ce que**, dans l'axe du pignon planétaire (8) est réalisée au moins une conduite d'alimentation en lubrifiant (36) qui est guidée, au niveau des coussinets de palier (28), hors de l'axe du pignon planétaire (8)
et **en ce que**, dans l'axe du pignon planétaire (8), est réalisée en outre au moins une conduite d'évacuation de lubrifiant (37) qui débouche au niveau de la bride de positionnement axial (29), dans l'axe du pignon planétaire (8).

9. Éolienne avec un engrenage planétaire (1), **caractérisée en ce que** l'engrenage planétaire (1) est conçu selon l'une des revendications précédentes.
